# EUROPEAN PATENT SPECIFICATION

(11) **EP 0 440 291 B1**
(45) Date of publication and mention of the grant of the patent: **12.10.1994**
(21) Application number: 91200150.0
(22) Date of filing: 25.01.1991
(51) Int. Cl.: B65D 77/20

(54) **Peelable lid seal**
Aufreissverschluss für Behälter
Couvercle avec joint pelable

(30) Priority: 29.01.1990 US 471329; 29.01.1990 US 471330
(43) Date of publication of application: 07.08.1991
(73) Proprietor: SHELL INTERNATIONALE RESEARCH MAATSCHAPPIJ B.V., 2596 HR Den Haag (NL)
(72) Inventor: Thomas, John Sheridan, Jr., Williamburg, Virginia 23185 (US)

(56) References cited:
- EP-A- 0 324 260
- US-A- 4 810 541

## Description

This invention relates to a container having an easily peelable container/lid seal system, and a method for making such a sealed container.

As discussed in U.S. Patent 3,491,935 packages of thermoplastic materials have been used extensively in various industries for dispensing a wide variety of both flowable and non-flowable materials. These packages consist of containers that have been sealed in various ways, and recently there has been a great need for a container sealed with thin-wall sealing material that is either punctured or removed by the consumer to access the contents of the sealed package.

The '935 patent uses a differential method of forming a peelable seal for the containers in which the two thermoplastic materials selected to form the lid and the container have different softening points. These materials are heated while they are in contact with one another so that the first material fuses and secures itself to the second material, and thereby forms the desired peelable seal without fusing the second material (lines 15-22 of col. 2).

In the sealing operation of the '935 patent, the heat flows through the closure material from a heated sealing die which also extrudes a portion of the closure material from beneath the die, so as to form a bead on the flange of the container. It should be noted that the beads formed in this reference are not on the inner rim of the flange.

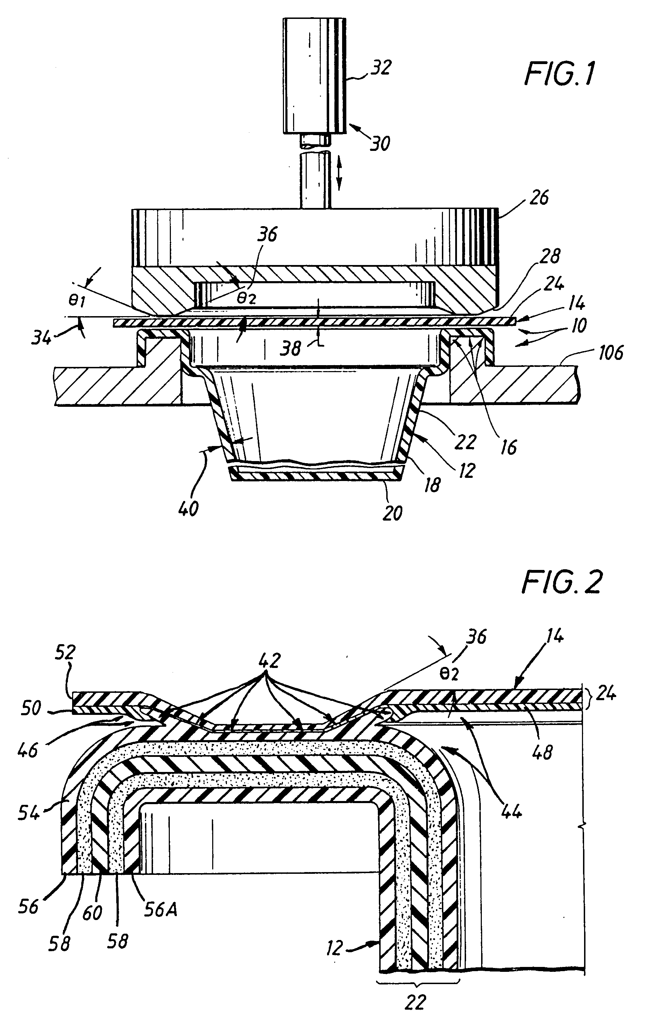

U.S Patent 4,519,499 issued to Stone et al on May 28, 1985, (as well as U.S. Patent 4,496,046, same inventor and assignee), discloses a container having a selectively openable seal line and peelable barrier means. The container is made of two sheets which are secured to each other by a seal that includes a bead area of increased thickness at the break end of it, (Figures 1, 2 and 3; lines 46-48 of col. 2). The sealing die used for sealing the two sheets together consist of a die head and a mirror image die head. Each of them has a convex projection and a bevel surface formed 5 degrees from horizontal (Figures 7, 8, 9, and 10, lines 15-32 of col. 6). This reference relates to the use of a sealing die having a beveled surface and the formation of beads. However, it does not relate to the formation of beads on the inner rim of a container.

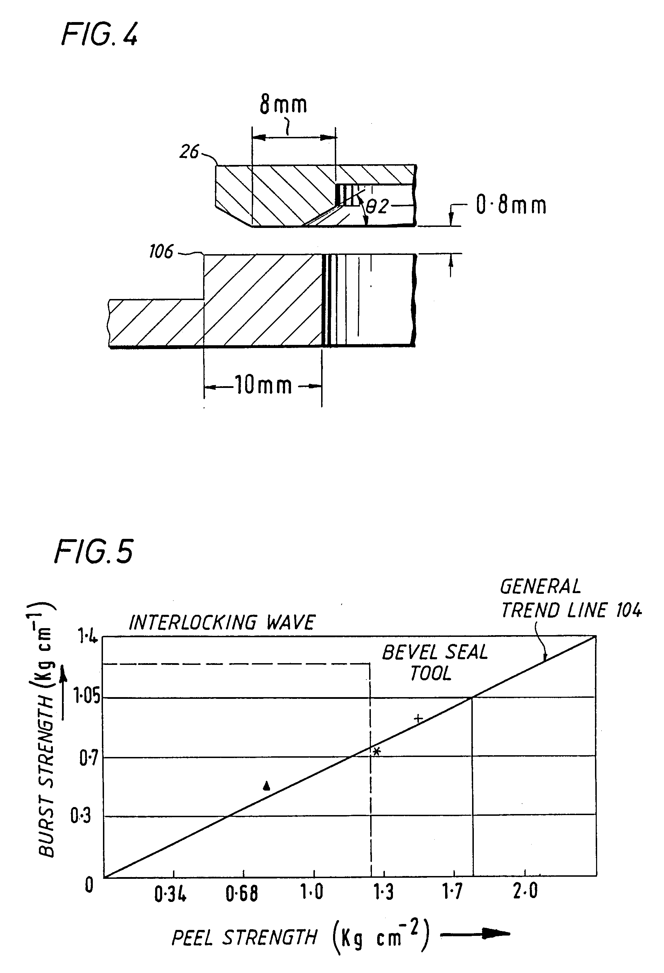

UK Patent Application GB 2,213,125A & EP-A-0 324 260 which forms the basis for the preamble, discloses the formation of beads on the inside rim of a container flange, but the failure plane formed during removable of the lid from the container is defined in a complex manner through both the lid and the container flange material. This design can lead to "unacceptable", failure plane variance such that "..the HDPE layer 12 (fig. 5) will tear and thereafter delaminate from the foil 14 starting at the point B, in which case satisfactory peeling of the closure away from the rim will not have been achieved." (Page 9, line 23 through Page 10, line 1)".

In food packaging, the area of the invention, is important that the lid remain fixed to the container during distribution of the closed container via various transportation routes to the eventual consumer. In an attempt to standardize the survivability determination of sealed containers, the U.S.D.A. has defined the "Restrained Burst Test" as a means of measuring this ability to maintain package integrity. The restrained burst test involves pressurizing the inside of the subject container with compressed air. The seal container must be able to maintain 0.35 kg.cm⁻² between the inside and outside of the container for at least 60 seconds.

Unfortunately, when one increases the survivability of the package by increasing the width and strength of the seal area between the container and the lid, (such as to withstand a 0.7 kg.cm⁻² pressure differential), the peel strength in the prior art devices also increases in a linear manner such that it becomes very hard for the purchaser of the packaged food container to open the lid. The designer of the food container is therefore faced with a Hobson's choice, wherein a container that may survive the transportation phase will not be openable by the subsequent purchaser, or where an "easy open" container will not survive the transportation process. Increasing the burst strength of a container causes an undesirable increase in the peel strength required to open the container.

Most food packers require a minimum of 0.7 kg.cm⁻² burst pressure and would like 1 kg.cm⁻². With conventional lid sealing, 1 kg.cm⁻² bursts requires a material that has a peel strength of 1.9 kg.cm⁻¹. This is extremely difficult to peel.

A sealing structure therefore needs to be developed between the lid and the container that gives the sealed container a high burst pressure, yet allows the lid to be easily peeled from the container.

In addition, a method of sealing a lid to a container needs to be developed wherein a high burst pressure for the container does not unduly hamper the consumer from peeling the lid from the container.

The present invention achieves these objectives through an improved configuration of interlocking waves between the lid and the container flange. Thus, in one embodiment, the invention provides a container hermetically closed with a lid; said lid (14) being formed from a first sheet (24) which comprises bears on its lower surface a layer of first plastics material (48); said container (12) having a base (20) with a wall (18) around its periphery which extends upwardly therefrom, the upper portion of said wall having a flange (16) thereon formed from a second sheet (22) which bears on its upper surface a layer of second plastics material (54); the lid and flange being hermetically sealed to one another by interlocking between at least one annular projection formed in the first sheet material (72) and at least one annular projection formed in the second sheet material (70), in which the first sheet projection apex (76) overlaps with the second sheet projection apex (80); characterised in that said annular projection(s) are waves, are formed such that the second sheet wave (70) remains with the container flange when the lid is removed.
The invention further provides a method of engaging a lid to a container which comprises:-
- heating along an area to be sealed a first plastics material (48) of a first sheet (24) forming said lid (14), while said first sheet is in direct and intimate contact along said area to be sealed with a second plastics material (54) of a second sheet (22), said second sheet forming a flange (16) about the upper periphery of said container (12), said first plastics material having a lower melting temperature than said second plastics material and said heating being carried out for a time and temperature sufficient to melt or soften a portion of said first plastics material (48),
- applying pressure to said first sheet (24) and said second sheet (22) along said area to be sealed so as to form at least at the inside rim of said container at least one preliminary first sheet annular projection (62),
- heating a portion of said second sheet (22) sufficiently to melt or soften a portion of said second plastics material (54),
- flowing said melted or softened portion of said second sheet into said preliminary first sheet projection(s) (62) to form at least one second sheet annular projection (70),
- displacing a portion of said preliminary first sheet projection (62) below said second sheet projection (70) so as to form interlocking projection of said first material and said second material at least around the inside rim of said container,
- characterised in that the interlocking projections are waves, formed such that said second sheet wave (70) remains with said container flange (16) when said lid (14) is disengaged from said container (12).

The lid material typically has a lower melting temperature than the container flange material. Pressure applied to the melted lid material by a seal head causes a portion of the melted lid material to flow towards the inside rim of the container, where the lid meets the container flange. A preliminary wave of molten lid material is thereby formed about the inside rim of the container.

Pressure on the container flange transmitted through the lid by the seal head also causes a portion of the flange material to flow towards the inside rim of the container. The pressures, temperatures, and timing of the pressure and temperature application are selected such that a wave of flange material penetrates the molten wave of the lid material. The flange material wave effectively divides a portion of the preliminary lid material wave such that a portion of the lid material wave is moved beneath the container wave.

The separate waves are sized to interlock with one another, thereby forming a single interlocking wave which creates a sealed area about the inside rim of the container that is resistant to the higher burst pressures encountered, for example, in a retort process. The waves are positioned in an overlapping manner generally normal to the applied internal pressures generated within the sealed container. It should be noted that the seal layer on the lid must be sufficiently thick for the wave to form.

The peel strength, however, required to remove the lid from the container remarkably remains within acceptable limits since the peel forces are applied parallel to the interlocked wave joint. Even though the burst strength increases significantly, the peel strength, due to the geometrical alignment of the waves according to this invention, remains well within acceptable limits.

The operative engagement of the lid to the container will normally be of sufficient closeness so as to hermetically seal the lid to the container. The lid and/or container material may be heated by a conduction seal head, or by other means well known to the art such as by radio frequency heating.

The invention is illustrated in the following detailed description, wherein reference is made to the Figures in the accompanying drawings.

Figure 1 shows a schematic representation in a side view in partial cross section of a lid positioned over the flange of a container, prior to engagement of a seal head with the upper surface of the lid.

Figure 2 shows a schematic representation in a side view in cross section of the lid sealed to the container flange.

Figure 3A shows a schematic representation in a side view in partial cross section of the lid material initially flowing from beneath the seal head contact area.

Figure 3B shows a schematic representation in a side view in cross section of the interlocking first sheet wave and second sheet wave.

Figure 3C shows a schematic representation in a side view in cross section showing the lid being peeled from the container.

Figure 4 shows a schematic representation in a side view in cross section of the typical dimensions of the seal head and support die.

Figure 5 shows a graphical comparison of the interlocking wave bevel seal tool burst strength versus peel strength, as compared with the burst strengths and peel strengths of commercially available heat sealed container/lid systems.

Referring now to Figure 1 the food container article 10 of the present invention is shown having a container 12 and lid 14. Container 12 can be seen to include flange 16 formed about the upper periphery of the container wall 18 which typically extends upward from a base 20 of the container. The flange 16 is formed from a second sheet 22 incorporating a second material either singly or in the form of a discreet layer, as described hereinbelow. In a similar manner, the container lid 14 is formed from a first sheet 24 which includes either singly or in the form of a discreet layer, a first material. Lid 14 is placed above flange 16 of the container 12 and a seal head 26 having a shaped surface 28 is moveable downward into contact with the lid and container by actuation of the movement means 30 such as a controllable pneumatic cylinder 32 well known to the art.

Shaped surface 28 in a preferred embodiment, includes beveled angle Theta 1, 34 and beveled angle Theta 2, 36 in a preferred embodiment having values from 15 to 45°. Lid 14 in a preferred embodiment will have a thickness T1 38 of 0.12 to 0.30 mm whereas container wall 18 will have a thickness T2, 40 of 0.75 mm.

Referring now to Figure 2, lid 14 is shown operatively engaged to the container 12 after the seal head 26 has contacted, heated, and/or pressured portions of the lid and container. The sealed area 42 can be seen to extend from the container inside rim 44 to the container outside rim 46. Angle Theta 2, 36 can be seen to have been impressed in the lid and container structure by downward movement of the seal head 26 into contact with the upper surface of the lid.

It can be seen that the lid is now operatively engaged to the container, and more particularly, by proper selection of the operating parameters of the invention, the lid is successfully hermetically sealed to the container.

The first material 48 which comprises in a preferred embodiment a lower layer of the lid having a thickness of approximately 0.05 mm (.002 inches) is a mixture of high density polyethylene and polyisobutylene, forming blend layer 50. The first material 48 would have a melting temperature of from about 125 to about 140°C. The top layer of the lid of the preferred embodiment would comprise a PET/PVDC/PET layer 52 as is commonly used in the top lid structures of food containers. Alternatively, of course, the top layer could be aluminum foil. Layers 52, 50 form the structure of the first sheet 24.

The second material 54 portion of the second sheet 22 in a preferred embodiment comprises a polypropylene layer 56 having a melting temperature of from about 165 to about 175°C. The first material in a preferred embodiment has a lower melting temperature than the second material, though it should be well understood that various melting temperature materials may be used to practice the invention.

The remaining layers of the second sheet 22 would typically comprise an adhesive layer 58 such as functionalized polypropylene, an EVOH layer 60, followed by another adhesive layer 58, and finally ending with another layer of polypropylene 56A. Regrind material layers may be included in the second sheet as is well known to the art.

It should be well recognized that many other layer laminates may be used to accomplish the same interlocking wave joinder of a lid and a container. It should also be recognized that although fig. 2 illustrates an embodiment of the invention in which one interlocking wave is located close to the interior rim of the container and another interlocking wave is situated close to the outer rim, the invention is not restricted to such "double wave" concept. A single interlocking wave, situated close to the outer or inner rim, preferably close to the inner rim, is also envisaged within the scope of this invention.

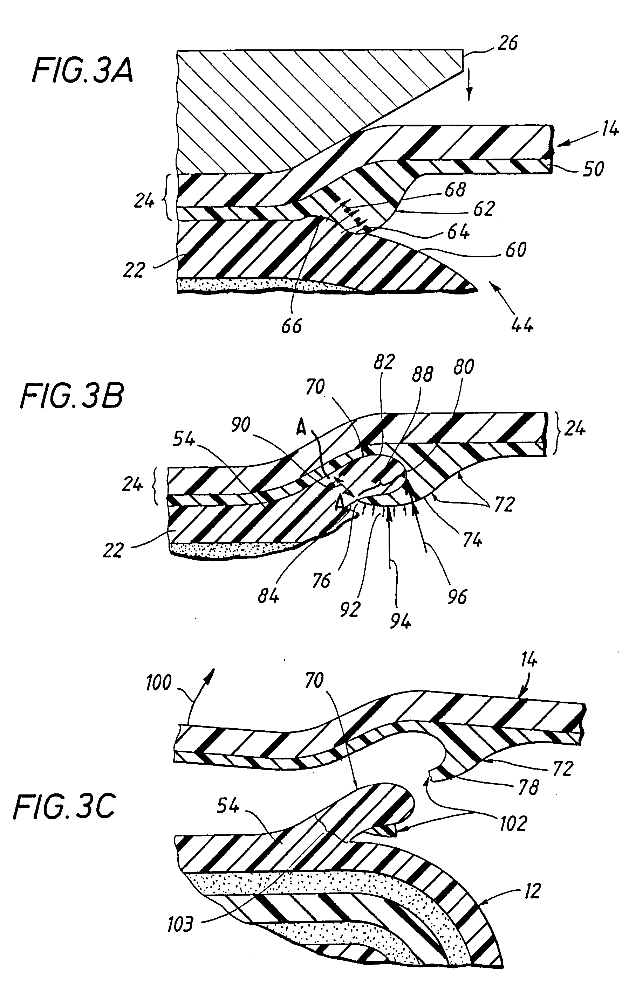

Referring now to Figures 3A, 3B and 3C the method of sealing the lid to the container, as well as removal of the lid from the container is shown. Referring more specifically to Figure 3A, the seal head 26, preferably heated to a temperature of from 212 to 245 °C, is shown driven downward into contact with the first sheet 24 at a sufficient distance to compress the first sheet and the top surface 60 of the second sheet together. As previously mentioned, the first sheet may be heated by driving a heated surface of the seal head 26 downward into contact with the first sheet, or the first sheet may be heated by radio frequency energy as is well known to the art, prior to or during contact of the seal head with the first sheet. The second sheet 22 may also be (pre)heated by the application of RF energy, or in a preferred embodiment the second sheet is heated by thermal energy transferred from the first sheet into the second sheet, the thermal energy being delivered to the first sheet by contact of the heated seal head with the first sheet.

In operation, the heated seal head is driven downward into the first sheet 24 and supplies sufficient pressure and thermal energy, during the initiation of the lid sealing process, so as to melt the blend layer 50 to cause a portion of the layer to flow outward from underneath the contact area of the seal head so as to form a preliminary first sheet wave 62. Wave 62, for the purposes of comparison with Figure 3B, can be seen to include the position of a preliminary first sheet wave apex 64. The thermal energy and pressure supplied by the seal head is also sufficient to begin the formation of a second sheet melted portion 66 having a preferential second sheet flow direction 68 as indicated by the arrows shown penetrating the blend layer 50 of the first material 48.

The initial step of the process used to form the article of the present invention can therefore be seen to include the formation at the inside rim of the container of the preliminary first sheet wave 62. The lower side of the preliminary wave 62 due to the selection of materials in the preferred embodiment is adhesively engaged with the second sheet top surface 60 such that the flow mass of the first material displaced from beneath the seal head tends to concentrate along the container inside rim 44.

Referring now to Figure 3B, a portion of the second sheet has been heated and/or pressured for a sufficient time to melt and/or displace a portion of the second material 54. The melted and/or displaced portion of the second sheet thereafter flows into the preliminary first sheet wave 62 (Figure 3A) to form a second sheet wave 70, simultaneously displacing a portion of the preliminary first sheet wave below the second sheet wave 70 so as to form the first sheet wave 72, which interlocks over interlock area 88 with the second sheet wave 70 around the inside rim of the container.

The second sheet wave 70 in other words "jets" or flows upwardly into the preliminary first sheet wave 62 so as to divide the preliminary wave 62 into an upper and lower portion, the lower portion being labeled as the first sheet wave 72. This wave 72 can be seen to have a first sheet wave crest surface 74 defined along its outer periphery, and also a first sheet wave apex 76 located at the distal end of the crest surface 74, and also located at the distal end of the underside 78 (Figure 3C) of the first sheet wave 72.

In a similar manner, the second sheet wave 70 can be seen to include a second sheet wave apex 80 located at the distal end of the second sheet wave crest surface 82 and the second sheet wave underside 84. More specifically, the waves 70, 72 can be seen to be overlapped between the first sheet wave apex and the second sheet wave apex to form the interlock area 88.

The burst pressure of the container/lid system is a function of the shear strength of the second sheet wave across lines A-A of shear couple 90, the mode of failure being shear across the second wave. The shear failure force is much higher than the peel force 100, (Fig. 3C). The distributed internal pressure 92 is represented by a series of small arrows formed normal to the first sheet wave crest surface 74. This distributed internal pressure 92 may be represented by a center of pressure arrow 94 which represents a summation of the distributed internal pressure 92 over the area of interest. It can be seen that the shear couple 90 counteracts the center of pressure arrow 94, representing in a graphical manner that the strength of the container/lid joint is enhanced by the interlocking wave design.

It is well known that the distributed internal pressure 92 generates hoop stresses throughout the container/lid structure, these hoop stresses being counteracted by the shear force across the material of the second wave. It can be seen therefore that the container lid junction structure, by use of the interlocking waves 70, 72 formed substantially normal to the distributed internal pressure 92, effectively resists destruction of the container/lid junction up to pressures of approximately 125 kPa (18 psi), (reference Figure 5). For the purposes of graphical description, Figure 3B also includes an apex pressure vector 96 defined normal to the first sheet wave crest surface 74 and tangentially intersecting the second sheet wave apex 80.

In a preferred embodiment therefore, the pressures and temperatures, along with the selection of the container/lid junction are selected such that after application of the heated seal head the first sheet wave apex and the second sheet wave apex are located on opposite sides of a defined center of pressure 94, the center of pressure representative of that portion of the distributed internal pressure 92 contained within the sealed lid and container applied on the first sheet wave crest surface, between the first sheet wave apex and the apex pressure vector 96. Location of the apexes 76, 80 in such a manner increases the effective interlock area 88 of the junction and reduces the magnitude of the sheer stress that parallels the undersides of the waves 70, 72.

In a preferred illustrative embodiment the seal head would be heated to 219 °C and pressed against the container flange lid structure from 1.2 to 1.35 minutes at a constant pressure of from 3 to 6 kg.cm⁻².

It should be recognized in the article of the present invention that the first sheet wave apex 76 should at least extend leftward of the center of pressure arrow 94, although an alternative embodiment the first sheet wave apex should at least extend leftward of the apex pressure vector 96, depending of course on the choice of material(s) and/or adhesives used for the junction.

Referring now to Figures 3C when the consumer wishes to remove the lid from the container, a peel force indicated by arrow 100 is applied at the edge of the first sheet such that the lid is lifted upwards away from the second sheet material. It has been found in the removal of the lid from the container that a break point 102 is generated on the first sheet wave underside 78 of the first sheet wave 72.

It can therefore be envisioned that the peel forces required to remove the lid from the container need only be sufficient to overcome the adhesion of the first material from the second material from the container outside rim 46 (Figure 2) up to break point 102, along of course with the force necessary to shear the first material at break point 102. The peel force therefore is merely required primarily to overcome adhesive resistant forces, whereas for the container to burst the internal pressure forces must at least be sufficient to cause the second sheet wave to fail in shear at lines A-A in the area of the wave root 103.

In comparing the failure plane location of the present invention with that of the afore said UK Patent Application, it should be noted that the known lid peels the core ears (16) away from the container flange, (reference Figure 3), whereas in the present invention the "ear" (labelled as our second sheet wave 70 in present Figure 3C) remains with the container flange. The prior art document specifically states that leaving the ear on the container flange is unacceptable, (page 9, line 11, through page 10, line 3).

The operability of the prior art lid peel system is therefore highly dependent on the thickness of the tin root (34), whereas no such sensitivity exists in the present invention. Since the wave root 103 is not placed within the peel-failure plane, neither the fabricator nor the purchaser of the lid-sealed container need worry about the maximum thickness of wave root 103, as to whether the lid will properly peel from the container flange.

Referring now to Figure 4 the illustrative dimensions used in the practice of the preferred embodiment are shown for the seal head 26, as well as for the support die 106 used to support the container flange 16.

Burst strength and peel strength test results of the lid and container of the preferred embodiment (graphically represented in Figure 5), show that the peel strength is less than 1.4 kg.cm⁻¹, whereas the burst strength is 1.3 kg.cm⁻¹. A container/lid sealing structure may therefore be generated that has a clearly superior burst and peel strength relationship than those indicated by the general trend line 104 in Figure 5.

The invention is likewise concerned with a method of engaging a lid to a container which comprises:
- heating along an area to be sealed a first material portion of a first sheet forming said lid, while said first sheet is in direct and intimate contact along said area to be sealed with a second material portion of a second sheet, said second sheet forming a flange about the upper periphery of said container, said first material having a lower melting temperature than said second material, said heating being carried out for a time and temperature sufficient to melt or soften a portion of said first material,
- applying pressure to said first sheet and said second sheet along said area to be sealed so as to form at least at the inside rim of said container a preliminary first sheet wave,
- heating a portion of said second sheet sufficiently to melt or soften a portion of said second material,
- flowing said melted or softened portion of said second sheet into said preliminary first sheet wave to form a second sheet wave,
- displacing a portion of said preliminary first sheet wave below said second sheet wave so as to form interlocking waves of said first material and said second material at least around the inside rim of said container, said second sheet wave remaining with said container when said lid is disengaged from said container.

The preferred way of heating the said second sheet includes the step of:
- driving a heated shaped surface of a seal head downward into contact with said first sheet for a period sufficient to transfer thermal energy through said first sheet into said second sheet.

## Claims

1. A container hermetically closed with a lid; said lid (14) being formed from a first sheet (24) which bears on its lower surface a layer of first plastics material (48); said container (12) having a base (20) with a wall (18) around its periphery which extends upwardly therefrom, the upper portion of said wall having a flange (16) thereon formed from a second sheet (22) which comprises or bears on its upper surface a layer of second plastics material (54); the lid and flange being hermetically sealed to one another by interlocking between at least one annular projection formed in the first sheet material (72) and at least one annular projection formed in the second sheet material (70), in which the first sheet projection apex (76) overlaps with the second sheet projection apex (80); characterised in that said annular projection(s) are waves, formed such that the second sheet wave (70) remains with the container flange when the lid is removed.

2. A method of engaging a lid to a container which comprises:-
- heating along an area to be sealed a first plastics material (48) of a first sheet (24) forming said lid (14), while said first sheet is in direct and intimate contact along said area to be sealed with a second plastics material (54) of a second sheet (22), said second sheet forming a flange (16) about the upper periphery of said container (12), said first plastics material having a lower melting temperature than said second plastics material and said heating being carried out for a time and temperature sufficient to melt or soften a portion of said first plastics material (48),
- applying pressure to said first sheet (24) and said second sheet (22) along said area to be sealed so as to form at least at the inside rim of said container at least one preliminary first sheet annular projection (62),
- heating a portion of said second sheet (22) sufficiently to melt or soften a portion of said second plastics material (54),
- flowing said melted or softened portion of said second sheet into said preliminary first sheet projection(s) (62) to form at least one second sheet annular projection (70),
- displacing a portion of said preliminary first sheet projection (62) below said second sheet projection (70) so as to form interlocking projections of said first material and said second material at least around the inside rim of said container,
- characterised in that the interlocking projections are waves, formed such that said second sheet wave (70) remains with said container flange (16) when said lid (14) is disengaged from said container (12).

## Patentansprüche

1. Behälter, der mit einem Deckel hermetisch verschlossen ist; wobei der Deckel (14) aus einem ersten Blatt (24) gebildet ist, welches auf seiner Unterseite eine Schicht eines ersten Kunststoffmaterials (48) aufweist; wobei der Behälter (12) eine Basis (20) mit einer Wand (18) um deren Umfang herum aufweist, die sich davon nach oben erstreckt, wobei der obere Teil der Wand einen aus einem zweiten Blatt (22) gebildeten Flansch (16) aufweist, welcher auf seiner Oberseite eine Schicht eines zweiten Kunststoffmaterials (54) aufweist oder trägt; wobei der Deckel und der Flansch durch den gegenseitigen Eingriff zumindest eines im ersten Blattmaterial (72) ausgebildeten kreisförmigen Vorsprunges mit zumindest einem im zweiten Blattmaterial (70) ausgebildeten kreisförmigen Vorsprung hermetisch versiegelt ist, wobei der Scheitel (76) des Vorsprunges des ersten Blattes den Scheitel (80) des Vorsprunges des zweiten Blattes überlappt; dadurch gekennzeichnet, daß der bzw. die genannten kreisförmigen Vorsprünge Wellen sind, die so geformt sind, daß die Welle (70) des zweiten Blattes am Behälterflansch verbleibt, wenn der Deckel entfernt ist.

2. Verfahren zum Verbinden eines Deckels mit einem Behälter; welches umfaßt:
- Erhitzen eines ersten Kunststoffmaterials (48) eines den Deckel (14) bildenden ersten Blattes (24) entlang des zu versiegelnden Bereiches, während das erste Blatt in direktem und innigem Kontakt entlang des zu versiegelnden Bereiches mit einem zweiten Kunststoffmaterial (54) eines zweiten Blattes (22) steht, wobei das zweite Blatt einen Flansch (16) um den oberen Umfang des Behälters (12) bildet, wobei das erste Kunststoffmaterial einen niedrigeren Schmelzpunkt hat als das zweite Kunststoffmaterial und das genannte Erhitzen über eine Zeit und auf einer Temperatur durchgeführt wird, welche ausreichen, um einen Teil des ersten Kunststoffmaterials (48) zu schmelzen oder zu erweichen,
- Aufbringen von Druck auf das erste Blatt (24) und das zweite Blatt (22) entlang des zu versiegelnden Bereiches, um zumindest am Innenrand des Behälters zumindest einen vorläufigen kreisförmigen Vorsprung (62) des ersten Blattes auszubilden,
- Erhitzen eines Teiles des zweiten Blattes (22) in ausreichendem Maße, um einen Teil des zweiten Kunststoffmaterials (54) zu schmelzen oder zu erweichen,
- Fließenlassen des geschmolzenen bzw. erweichten Teiles des zweiten Blattes in den bzw. die vorläufigen Vorsprünge (62) des ersten Blattes, um zumindest einen kreisförmigen Vorsprung (70) des zweiten Blattes zu bilden,
- Versetzen eines Teiles des vorläufigen Vorsprunges (62) des ersten Blattes unter den Vorsprung (70) des zweiten Blattes, um ineinandergreifende Vorsprünge aus dem ersten Material und dem zweiten Material zumindest um den Innenrand des Behälters herum zu bilden,
- dadurch gekennzeichnet, daß die ineinandergreifenden Vorsprünge Wellen sind, welche so geformt sind, daß die Welle (70) des zweiten Blattes am Behälterflansch (16) verbleibt, wenn der Deckel (14) vom Behälter (12) gelöst wird.

## Revendications

1. Récipient fermé hermétiquement avec un couvercle ; ledit couvercle (14) étant formé d'une première feuille (24) qui porte sur sa surface inférieure une couche d'une première matière plastique (48) ; ledit récipient (12) ayant une base (20) avec autour de sa périphérie une paroi (18) qui s'étend vers le haut à partir de celle-ci, la partie supérieure de ladite paroi ayant sur elle une collerette (16) formée d'une seconde feuille (22) qui comprend ou porte sur sa surface supérieure une couche d'une seconde matière plastique (54), le couvercle et la collerette étant hermétiquement scellés l'un l'autre par un verrouillage entre au moins une saillie annulaire formée dans la matière de la première feuille (72) et au moins une saillie annulaire formée dans la matière de la deuxième feuille (70), dans laquelle l'apex de la saillie de la première feuille (76) est recouverte par l'apex de la saillie de la deuxième feuille (80) ; caractérisé en ce que lesdites saillies annulaires sont des lames, formées de telle sorte que la lame de la seconde feuille (70) reste sur la collerette du récipient lorsque le couvercle est enlevé.

2. Procédé pour mettre en prise un couvercle avec un récipient qui comprend : le chauffage le long d'une zone à fermer hermétiquement d'une première matière plastique (48) d'une première feuille (24) formant ledit couvercle (14), pendant que ladite première feuille est en contact direct et étroit le long de ladite zone à fermer hermétiquement avec une seconde matière plastique (54) d'une seconde feuille (22), ladite seconde feuille formant une collerette (16) autour de la périphérie supérieure dudit récipient (12), ladite première matière plastique ayant une température de fusion inférieure à celle de la seconde matière plastique et ledit chauffage étant réalisé pendant une durée et une température suffisantes pour fondre ou ramollir une partie de ladite première matière plastique (48), l'application d'une pression sur ladite première feuille (24) et ladite seconde feuille (22) le long de ladite zone à fermer hermétiquement afin de former au moins sur le bord interne dudit récipient au moins une saillie annulaire préliminaire de la première feuille (62),
le chauffage d'une partie de ladite seconde feuille (22) de manière suffisante pour fondre ou ramollir une partie de ladite seconde matière plastique (54),
l'écoulement de ladite partie fondue ou ramollie de ladite seconde feuille dans ladite saillie de la première feuille préliminaire (62) pour former au moins une saillie annulaire de la seconde feuille (70),
le déplacement d'une partie de ladite saillie de la première feuille préliminaire (62) sous ladite saillie de la seconde feuille (70) afin de former des saillies de verrouillage mutuel de ladite première matière et ladite seconde matière au moins autour du bord interne dudit récipient,
caractérisé en ce que les saillies de verrouillage mutuel sont des lames formées de telle sorte que ladite lame de la deuxième feuille (70) reste avec ladite collerette de récipient (16) lorsque ledit couvercle (14) est désengagé dudit récipient (12).
